# EUROPEAN PATENT SPECIFICATION

(11) **EP 2 906 667 B1**
(45) Date of publication and mention of the grant of the patent: **11.01.2017**
(21) Application number: 12781276.6
(22) Date of filing: 10.10.2012
(51) Int. Cl.: C10L 5/36, C10L 5/44

(54) **COMPACT FIRE LOG AND A METHOD OF FORMING THEREOF**
KOMPAKTES FEUERHOLZSTÜCK UND VERFAHREN ZUR FORMUNG DAVON
BÛCHE COMPACTE ET SON PROCÉDÉ DE FORMATION

(43) Date of publication of application: 19.08.2015
(73) Proprietor: Paapsi, Margus, 60230 Tartu maakon (EE)
(72) Inventor: Paapsi, Margus, 60230 Tartu maakon (EE)
(74) Representative: Kahu, Sirje
(86) International application number: PCT/EE2012/000005
(87) International publication number: WO 2014/056510

(56) References cited:
- CH-A5- 697 091
- DE-C- 362 075
- DE-U1- 20 001 115
- JP-A- 2002 338 978
- US-A1- 2006 162 244
- US-A1- 2012 304 533

## Description

### TECHNICAL FIELD

The invention refers to a means for log-fires preserving the log's decorative upper surface for the entire burning period; it can be used in a fireplace or at a campsite and can later be used to make grill coal.

### BACKGROUND OF THE INVENTION

There are disclosed several compact means for starting a log-fire, including wood logs. The United Kingdom patent GB 17327 (W.B. Hartridge, 1897) describes a wood log that contains a flammable substance and is used as a container for this flammable substance. Holes drilled into the log are filled with a flammable substance (e.g. coal dust) and sealed with caps. The aim is a longer burning time of the wood log and at the same time making use of the coal dust or other finely fractioned flammable substance.

JP2002338978A discloses a wooden log with a through hole, into which a firing angular part is projected, which penetrates the core material of the log towards an axial direction.

Coal dust can not be openly used in a fireplace, but can be, when sealed in a wood log. Wood logs known as Lapland candles also contain incisions which enable burning it as a single log. In case of the Lapland candle, the incisions extend over the sides of the log which cause the flames to immediately spread to the log's side surfaces; the log bums as a torch and will fall into pieces before burning out.

Thus, no comfortable fire log is disclosed that would enable comfortable handling and that would burn evenly as a whole; that would not burn as a torch and fall into pieces before burning out; and that could be used both in a campfire and a fireplace; and where everything necessary would be in one package that requires no additional preparations before use.

### DISCLOSURE OF THE INVENTION

It is an object of the present invention to provide an improved compact fire log that bums evenly and as a whole for a long time, preserving the log's decorative surface for the entire burning period, and a method of forming thereof.

The compact fire log comprises an unbroken wood log sawn from the trunk of a tree, having a longitudinal extent from end-to-end, a midsection, a lower part, an upper surface, a side surface and a lower surface. The upper and lower surfaces are preferably planar, and the upper surface is preferably parallel to the lower surface. The fire log comprises one or several of longitudinally extending, end-to-end incisions therethrough, wherein the incisions intersect in the log's midsection and fail to extend to the log's side surface. In order to guarantee the supply of air, the fire log further comprises one or several air ducts in the lower part of the log that extend from the log's side surface to the midsection of the log. Ignition device, which is impregnated with a flammable substance, is disposed in at least one of the incisions.
The ignition device may be an ignition strip, tablet, briquette or other, permeated with a flammable substance, which bums fast and evenly and is ecologically friendly. The incisions may be filled with the ignition device.
The ignition device may contain a wick, fuse or other. The ignition device is preferably impregnated with natural flammable substances such as stearine, paraffin or other.
The disclosed device will initially burn as a fire, it does not fall to pieces, the decorative upper surface of the fire log shall be retained for the entire burning period, and later the coal can be used for grilling. The upper surface of the fire log can be an upper surface of a cooking stove. A pot or pan can be placed on the top surface of the fire log for cooking.

The fire log contains a wood log 1, an ignition device 2, a longitudinal penetrating incisions 3, air ducts 4, one or several handles 5 and handle fasteners 6.
A fire log of the present invention will burn from the inside out; similarly to a candle, the flames will exit from the upper end preserving the log's decorative upper surface for the entire burning period.
Depending on the position and number of longitudinal incisions it is possible to generate desired images by burning of the fire log. For example, when the fire log has several longitudinal incisions, then the flaming and glowing images of multi-pointed star will appear on the upper surface of the fire log.
A fire log of the present the invention will burn significantly longer and give more warmth than a Lapland candle.

Another object of the present invention is a method of forming a compact fire log, which comprises the following steps:
a) cutting a wood log from a tree trunk, wherein the wood log has a longitudinal extent from end-to-end, a midsection, a lower part, an upper surface, a side surface and a lower surface, whereas the upper and lower surfaces are preferably planar, and the upper surface is preferably parallel to the lower surface;
b) forming one or several longitudinally extending end-to-end incisions in the wood log, wherein the incisions intersect in the wood log's midsection and do not extend to the wood log's side surface; and
c) forming one or several an air ducts in the lower part of the wood log, wherein the air duct extends from the wood log's side surface to the midsection of the wood log.
An ignition device is placed in at least one of the incisions. The number of said incisions and their location in the wood log are selected according to the desired image (e.g. a multi-pointed star) on the upper surface of the burning fire log.

### LIST OF FIGURES

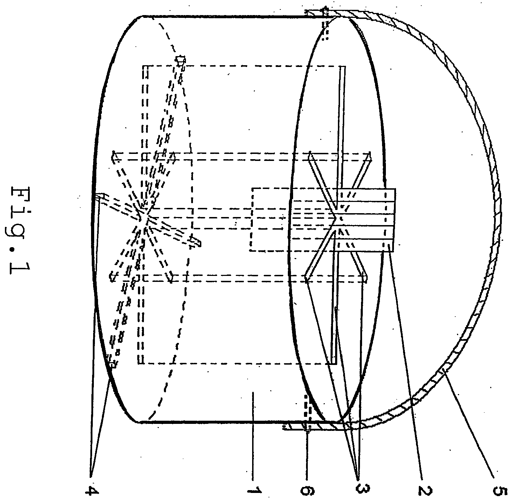

Figure 1: An overview of the device, where 1 - the log, 2 - ignition device, 3-penetrating incisions, 4 - air ducts, 5 - handle, 6 - handle fastener.

### DESCRIPTION OF EMBODIMENTS

A log is cut from a tree trunk in the desired length of 15-25 cm and a width of 25-35 cm for making the fire log. This is not split into pieces. Hardwood is preferred, especially birch, which burns for a long time, does not spark and has a decorative bark. Longitudinal incisions are made into the log's midsection which pass through the ends of the log. The number of incisions and their location in the wood log are selected according to the desired image (e.g. a multi-pointed star) on the upper surface of the burning fire log. The incisions are filled with the ignition device, which could be a sheet from cardboard strips permeated with a flammable substance or an ignition tablet or briquette containing a fuse. Paraffin, stearine, previously used cooking oil or other flammable substances can be used for impregnating the ignition device.

At least one air duct is made into the lower part of the log from the side surface to the midsection to ensure sufficient airflow in case the log is placed on a surface where airflow to the log's lower part is obstructed.
One or several handles are fastened to the log for instance using clamps.
Upon use the compact fire log is placed with the help of the handle(s) to the desired fire place (ground, fireplace or other surface) and the ignition device (fuse) is lit. After ignition, the ignition device catches fire and the flame moves inside the log down- and outward from the midsection through the incisions. As the longitudinal incisions do not reach the fire log's side surfaces, most of the surface will remain intact for a long time during burning. Thanks to the placement of the longitudinal incisions and air ducts, the log burns evenly during a long period of time. For instance a fire log with the length of 20 cm and width of 30 cm will burn with a flame for 2,5 - 3 hours.
The advantages of the invention are thus the following: firstly, fire log burns evenly and as a whole for a long time and does not break apart during burning and the desired decorative upper surface (e.g. image of multi-pointed star) of the fire log shall be retained for the entire burning period.
Secondly, it is convenient to use: it is easy to take along and does not require any additional actions to put it into working order. Thirdly, it uses natural renewable raw materials which are environmentally friendly and economic: they can be made using wood processing waste products and the ignition strip can be impregnated with natural flammable substances. Thus, it is not necessary to use ignition fluids or other inflammable or strongly smelling chemicals. Fourthly, in use in the open air, or indoor fire-place (hearth), the fire log requires no additional support for using a pot or a pan to prepare or warm food. The upper surface of fire log formed a cooking surface, like a cooking stove.

## Claims

1. A compact unbroken wooden fire log having a longitudinal extent from end-to-end, a midsection, a lower part, an upper surface, a side surface and a lower surface, **characterized in that** in order to avoid burning of the upper and side surfaces of the log, and to assure even burning of the log for the burning period, the log comprises: one or several longitudinally extending, end-to-end incisions therethrough, wherein the incisions intersect in the log's midsection and fail to extend to the log's side surface; and an air duct, in the lower part of the log that extends from the log's side surface to the midsection of the log along the lower surface of the log and fails to extend to the upper part of the log, and the air duct is radially offset from the incisions so that the air duct intersects the incisions only at the log's midsection.

2. The compact log of claim 1 and further comprising: an ignition device disposed in at least one of the incisions.

3. The compact fire log of claim 2 wherein the ignition device is impregnated with a flammable substance.

4. The compact fire log of claim 3 wherein the flammable substance is a natural flammable substance.

5. The compact fire log of claim 2 wherein the incisions are filled with the ignition device.

6. The compact fire log of claim 1, and further comprising a plurality of said air ducts.

7. The compact fire log of claim 1 wherein the upper surface forms an upper surface of a cooking stove.

8. The compact fire log of claim 1 wherein the incisions form an desired image on the upper surface of burning fire log.

9. The compact fire log of claim 8 wherein the desired image is a multi-pointed star.

10. The compact fire log of claim 3, wherein the flammable substance is selected from a group consisting of paraffin, stearine and cooking oil.

11. The compact fire log of claim 1, further comprising a handle and a fastener attached to the handle.

12. A method of forming a compact fire log comprises: cutting a wood log from a tree trunk, wherein the wood log has a longitudinal extent from end-to-end, a midsection, a lower part, an upper surface, a side surface and a lower surface; forming one or several longitudinally extending end-to-end incisions in the wood log, wherein the incisions intersect in the wood log's midsection and do not extend to the wood log's side surface; and forming an air duct in the lower part of the wood log, wherein the air duct extends from the wood log's side surface to the midsection of the wood log along the lower surface of the log and fails to extend to the upper part of the log, and the air duct is radially offset from the incisions so that the air duct intersects the incisions only at the log's midsection.

13. The method of claim 12, and further comprising: disposing an ignition device in at least one of the incisions.

14. The method of claim 12 to 13, wherein the number of incisions and their location in the wood log are selected according to the desired image on the upper surface of the burning fire log.

15. The method of claim 14, wherein the desired image is a multi-pointed star.

## Patentansprüche

1. Kompaktes, ungeteiltes Feuerholzstück, welches eine Längsausdehnung von einem Ende zum anderen, eine mittlere Sektion, einen unteren Teil, eine obere Fläche, eine Seitenfläche und eine untere Fläche aufweist, **dadurch gekennzeichnet, dass** das Feuerholzstück, um das Brennen der oberen und der seitlichen Flächen der Fackel zu vermeiden, und um ein gleichmäßiges Abbrennen des Feuerholzstücks während der Brennperiode zu gewährleisten, Folgendes umfasst: einen bzw. mehrere sich in Längsrichtung von einem Ende zum anderen erstreckende Einschnitte, wobei die Einschnitte sich in der mittleren Sektion des Feuerholzstücks schneiden und sich nicht bis zur Seitenfläche des Feuerholzstücks erstrecken; und einen Luftkanal im unteren Teil des Feuerholzstücks, der sich von der Seitenfläche des Feuerholzstücks in Richtung der mittleren Sektion des Feuerholzstücks entlang der unteren Fläche des Feuerholzstücks erstreckt und der sich nicht bis zum oberen Teil de Feuerholzstücks erstreckt, und der Luftkanal ist in Bezug auf die Einschnitte radial versetzt, so dass der Luftkanal sich mit den Einschnitten einzig in der mittleren Sektion des Feuerholzstücks überkreuzt.

2. Kompaktes Feuerholzstück nach Anspruch 1, welches weiterhin ein zumindest in einem der Einschnitte angeordnetes Anzündmittel umfasst.

3. Kompaktes Feuerholzstück nach Anspruch 2, wobei das Anzündmittel mit einer brennbaren Substanz imprägniert ist.

4. Kompaktes Feuerholzstück nach Anspruch 3, wobei die brennbare Substanz eine natürliche brennbare Substanz ist.

5. Kompaktes Feuerholzstück nach Anspruch 2, wobei die Einschnitte mit Anzündmittel gefüllt sind.

6. Kompaktes Feuerholzstück nach Anspruch 1, welches weiterhin eine Mehrzahl der genannten Luftkanäle umfasst.

7. Kompaktes Feuerholzstück nach Anspruch 1, wobei die obere Fläche die Oberfläche eines Kochherds bildet.

8. Kompaktes Feuerholzstück nach Anspruch 1, wobei die Einschnitte ein gewünschtes Motiv auf der oberen Fläche der brennenden Fackel bilden.

9. Kompaktes Feuerholzstück nach Anspruch 8, wobei das gewünschte Motiv ein vielzackiger Stern ist.

10. Kompaktes Feuerholzstück nach Anspruch 3, wobei die brennbare Substanz aus der Gruppe bestehend aus Paraffin, Stearin und Speiseöl ausgewählt ist.

11. Kompaktes Feuerholzstück nach Anspruch 1, welches weiterhin einen Griff und einen am Griff befestigten Verbindungselement umfasst.

12. Verfahren zur Formung eines kompaktes Feuerholzstücks, umfasst Folgendes: das Schneiden eines Holzblocks aus einem Baumstamm, wobei der Holzblock eine Längsausdehnung von einem Ende zum anderen, eine mittlere Sektion, einen unteren Teil, eine obere Fläche, eine Seitenfläche und eine untere Fläche hat; das Ausbilden von einem oder mehreren sich in Längsrichtung von einem Ende zum anderen erstreckenden Einschnitte im Holzblock, wobei die Einschnitte sich in der mittleren Sektion des Holzblocks überkreuzen und sich nicht bis zur Seitenfläche des Baumstammes erstrecken; und das Formen eines Luftkanals im unteren Teil des Holzblocks, wobei der Luftkanal sich von der Seitenfläche des Holzblocks in Richtung der mittleren Sektion des Holzblocks entlang der unteren Fläche des Blocks erstreckt und sich nicht bis zum oberen Teil des Blocks erstreckt, und der Luftkanal ist in Bezug auf die Einschnitte radial versetzt, so dass der Luftkanal sich mit den Einschnitten einzig in der mittleren Sektion des Stammes überkreuzt.

13. Verfahren nach Anspruch 12, und weiterhin umfassend: Anbringen des Anzündmittels in zumindest einem der Einschnitte.

14. Verfahren nach einem der Ansprüche 12 und 13, wobei die Anzahl der Einschnitte und ihre Position im Holzblock gemäß einem gewünschten Motiv auf der oberen Fläche der brennenden Fackel gewählt sind.

15. Verfahren nach Anspruch 14, wobei das gewünschte Motiv ein vielzackiger Stern ist.

## Revendications

1. La bûche de foyer compacte et intacte en bois, ayant une étendue longitudinale de bout en bout, une section intermédiaire, une partie inférieure, une surface supérieure, une surface latérale et une surface inférieure, **caractérisée en ce que**, afin d'éviter la combustion des surfaces supérieures et latérales de la bûche et d'assurer la combustion uniforme de la bûche pendant toute la durée de la combustion, ladite bûche comprend: une ou plusieurs incisions longitudinales, de bout en bout de la bûche, les dites incisions se croisant dans la partie médiane de la bûche, sans toutefois atteindre la surface latérale de la bûche; et un conduit d'air, dans la partie inférieure de la bûche, qui s'étend depuis la surface latérale de la bûche jusqu'à la section intermédiaire de la bûche, le long de la surface inférieure de la bûche, sans toutefois atteindre la partie supérieure de la bûche, ledit conduit d'air étant radialement décalé par rapport à l'incision, de manière que le conduit d'air ne croise les incisions qu'à la section intermédiaire de la bûche.

2. La bûche compacte selon la revendication 1, comprenant en outre: un dispositif d'allumage disposé dans au moins l'une des incisions.

3. La bûche de foyer compacte selon la revendication 2, dans laquelle le dispositif d'allumage est imprégné d'une substance inflammable.

4. La bûche de foyer compacte selon la revendication 3, dans laquelle la substance inflammable est une substance inflammable naturelle.

5. La bûche de foyer compacte selon la revendication 2, dans laquelle les incisions sont remplies avec du dispositif d'allumage.

6. La bûche de foyer compacte selon la revendication 1, comprenant en outre une pluralité des dits conduits d'air.

7. La bûche de foyer compacte selon la revendication 1, dans laquelle la surface supérieure forme une surface supérieure du fourneau.

8. La bûche de foyer compacte selon la revendication 1, dans laquelle les incisions forment un dessin souhaité sur la surface supérieure de la bûche de foyer.

9. La bûche de foyer compacte selon la revendication 8, dans laquelle le dessin souhaité est en forme d'une étoile à plusieurs branches.

10. La bûche de foyer compacte selon la revendication 3, dans laquelle la substance inflammable est choisie dans un groupe constitué de la paraffine, de la stéarine, et de l'huile de cuisson.

11. La bûche de foyer compacte selon la revendication 1, comprenant en outre une poignée et une attache fixée à la poignée.

12. Le procédé de formation de la bûche compacte de foyer comprenant les étapes suivantes: la coupe d'une bûche de bois d'un tronc d'arbre, dans lequel la bûche en bois a une étendue longitudinale de bout en bout, une section intermédiaire, une partie inférieure, une surface supérieure, une surface latérale et une surface inférieure: la formation d'une ou de plusieurs incisions longitudinales s'étendant de bout en bout dans la bûche en bois, de manière que lesdites incisions se croisent dans la section intermédiaire de la bûche en bois, sans toutefois atteindre la surface latérale de la bûche en bois; et la formation d'un conduit d'air dans la partie inférieure de la bûche en bois, qui s'étend depuis la surface latérale de la bûche en bois jusqu'à la section intermédiaire de la bûche en bois, le long de la surface inférieure de la bûche, sans toutefois atteindre la partie supérieure de la bûche, et ledit conduit d'air est radialement décalé par rapport à l'incision, de manière que le conduit d'air ne croise les incisions qu'à la section intermédiaire de la bûche.

13. Le procédé selon la revendication 12, comprenant en outre: la mise en place d'un dispositif d'allumage dans au moins l'une des incisions.

14. Le procédé selon les revendications 12 et 13, dans lequel le nombre d'incisions et leur positionnement dans la bûche en bois sont choisis en fonction d'un dessin souhaité sur la surface supérieure de la bûche de foyer à brûler.

15. Le procédé selon la revendication 14, dans lequel ledit dessin souhaité forme une étoile à plusieurs branches.
